# EUROPEAN PATENT SPECIFICATION

(11) **EP 1 612 427 B1**
(45) Date of publication and mention of the grant of the patent: **25.02.2009**
(21) Application number: 04425484.5
(22) Date of filing: 30.06.2004
(51) Int. Cl.: F04D 29/04

(54) **Axial thrust-bearing for electric motor pump**
Axiales Lager für elektrische angetriebene Pumpe
Palier de butée pour pompe électrique

(43) Date of publication of application: 04.01.2006
(73) Proprietor: Askoll Holding S.r.l., 36031 Povolaro di Dueville (Vicenza) (IT)
(72) Inventor: Marioni, Elio, 36031 Dueville (Vincenza) (IT)
(74) Representative: Botti, Mario

(56) References cited:
- US-A- 3 220 350
- US-A- 4 869 654
- US-A- 4 998 863
- US-A- 5 895 203

## Description

### Field of application

The present invention relates to a rotation support with improved thrust-bearing for rotors of pump electric motors, i.e. a new way of supporting the axial thrusts which generate in the fluid circulation pumps in order to make it easier the production and to make the use and maintenance functional.

More in particular the invention relates to a rotation support for pump motors comprising a stator of the electric motor, in which a hollow body is housed for supporting and containing a permanent magnet rotor, an impeller being kinematically coupled with a shaft of the electric motor, as well as opposite shaft supports, one of which is provided with axial thrust-bearing.

### Prior art

As it is well known to the technicians in the field, fluid circulation pumps comprise an electric motor whose rotor is keyed to a shaft, which carries, kinematically connected with an end, the impeller of the pump.

The pumps can have impellers of various form and scope of propulsion of the treated fluid; in the case of impellers with curve vanes of the centrifugal type, the pulse given to the fluid generates an axial thrust due to the pressure gradient which generates between the suction and delivery areas of the impeller. For the conformation of the pump, exactly of the centrifugal type, the above areas are always placed with the suction area belonging to the impeller in axis with the rotation shaft and the delivery in an annular region external to the diameter of the impeller and coplanar thereto.

This arrangement generates an axial thrust acting on the impeller, resulting from the axial component of the difference between the pressure field exiting upstream and downstream the impeller, such as to approach the suction mouth of the impeller towards the conduit which feeds the fluid.

In the typology of the motor pumps for fluids at issue in the present invention, motor pumps are known wherein the electric motor is of the synchronous type and the permanent magnet rotor is housed in a hollow body within the stator pack and the windings. The pack with the windings is separated and insulated from the hollow body for ensuring the electrical insulation, but the rotor is housed inside the stator pack in a extractable way for allowing an easy assembly and possible extraction for the maintenance.

In the technique, supporting the rotor with supporting bushes of antifriction material is known: the bush on the impeller side also supports the axial thrust transmitted from the impeller to the rotor by means of the driving shaft. The contact between the axial abutment of the supporting bush and the rotor occurs by means of a thrust-bearing disk of hard, abrasion-resistant material inserted between said axial abutment and the side of the motor. This disk is normally placed by means of an annular seat inserted and made integral with the driving shaft: the seat and the disk are axially blocked on the shaft in a suitable position for centering the rotor on the stator.

This disk, in a realisation of the same applicant, is preferably placed by means of an annular cup of elastic material provided with a central convexity for allowing the adaptation of the disk to the abutment of the bush. The cup is further provided with engaging toothed edge of the external edge of the thrust-bearing disk.

The assembly of the disk and of the cup is housed in a suitable chamber realised on the side of the rotor by means of an extension of the plastic skirt of the rotor itself.

Therefore, in the state of the art, the support of the axial thrusts is known by means of the interposition of a suitable element, exactly the thrust-bearing disk, and of further accessory parts such as the containing annular seat and/or the annular cup of elastic material.

For instance in the US patent No. 4, 998, 863 it is disclosed a bearing 4 associated to a lateral thrust shim that is in contact with the side of rotor.

The technical problem underlying the present invention is that of transmitting the axial thrust between the shaft/rotor and the axial abutment of the supporting bush by simplifying the construction, reducing the axial sizes, making it more practical the assembly and simplifying the maintenance of the axial thrust-bearing on the side of the impeller. Another aim of the invention is that of realising an axial thrust-bearing for pumps which can achieve the necessary axial thrust-bearing of the impeller with very reduced costs and by exploiting the economies of scale typical of the products realised on a large scale.

### Summary of the invention

This problem is solved, according to the present invention, by a rotation support as previously indicated and characterised in that the support provided with thrust-bearing comprises a bush of antifriction material facing a side of the rotor and in that it has an axial abutment placed directly in contact with said side of the rotor.

The characteristics and advantages of the pump provided with support according to the invention will be apparent from the following description of an embodiment given by way of indicative and nonlimiting example with reference to the annexed drawings.

### Brief description of the drawings

Figure 1 shows a schematic, axial section of the motor pump provided with the support with improved thrust-bearing according to the invention, on the other hand shown with the relevant components of the control electronic circuit;
Figure 2 shows a schematic, exploded view of the rotor and of the support of the support of the rotor with the thrust-bearing according to the invention;

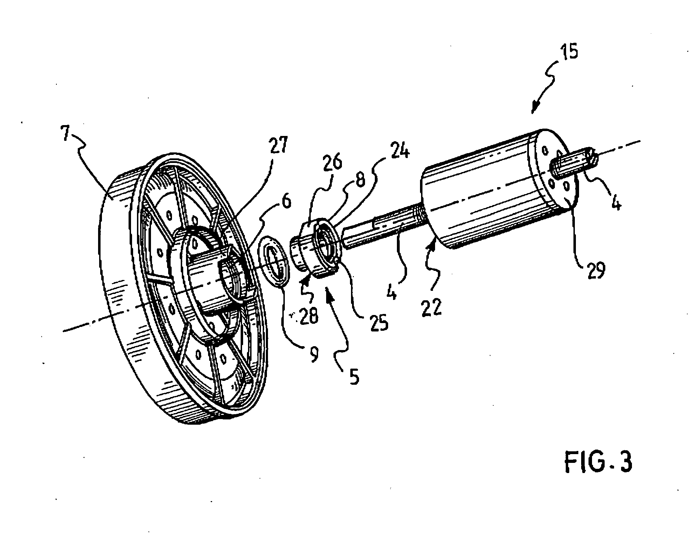

Figure 3 shows a schematic, exploded view of the rotor and of the support of the rotor with the thrust-bearing as the previous figure but from a different angle.

### Detailed description of a preferred embodiment

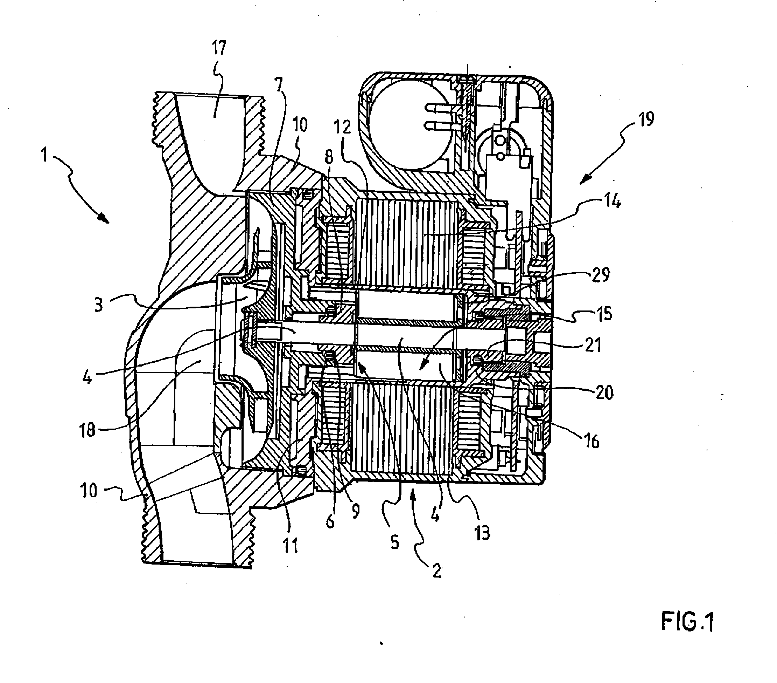

With reference to these figures, and in particular to the example of figure 1, 30 globally and schematically indicates a motor pump incorporating a rotation support 5 with thrust-bearing realised according to the present invention.

The motor pump 30 is realised by means of the coupling of a pump 1 and of an electric motor 2.

The pump 1 and the motor 2 have the same supports so that the impeller 3 of the pump is keyed to and rotably supported at one end of a shaft 4 of the electric motor.

Advantageously, a support 5 on the side of the impeller comprises a seat 6 integrally formed in a bush-carrying disk 7, of the impeller 3 for housing a bush 8 of antifriction material and an elastic ring 9 for suspending and adapting the bush 8 in the relevant seat 6; with a similar conformation of the rear bush, it allows, as it is known, the self-alignment of the rotation axis of the rotor with that of the supports.

The body 10 of the pump 1 is rigidly coupled, by means of a flange 11 of a hollow body 12, with the body 13 of the electric motor 2.

The electric motor 2 is advantageously of the synchronous type wherein a stator 14 is centrally crossed by the hollow body 12 for housing a rotor 15. The rotor is a permanent magnet 16 one and it is tightly insulated with respect to the stator 14 from the hollow body itself.

The rotor 15 is led into rotation by the electromagnetic field generated by the stator 14, provided with pole shoes with relevant windings.

The body 10 of the pump has a delivery opening 17 with axis being preferably orthogonal to the axis of the shaft 4 and it is placed tangentially to the impeller 3. The pump body also has a suction opening 18 wherefrom the fluid pumped by the impeller 3 is suctioned through the delivery opening. The suction opening 18 preferably has an axis being parallel to the axis of the shaft 4.

The electric motor is completed by the electronic components enclosed in a box 19 coupled with the body 13 of the electric motor on the opposite side of the pump 1.

The shaft 4 is supported on the opposite side of the impeller to said hollow body 12 which ends with a support 20 comprising an antifriction bush 21 realised in a known way.

The support 5 on the side of the impeller has the axial abutment of the bush 8 in contact with a side 29 of the rotor 22 wherein the magnets 16 emerge so that the contact occurs between said abutment and the sides 29.

Advantageously, the material the magnets are made of is magnetic ceramic ferrite provided with surface hardness being high enough so as to ensure the correct coupling with the abutment of the bush 8 of antifriction material, thus realising a sliding axial thrust-bearing.

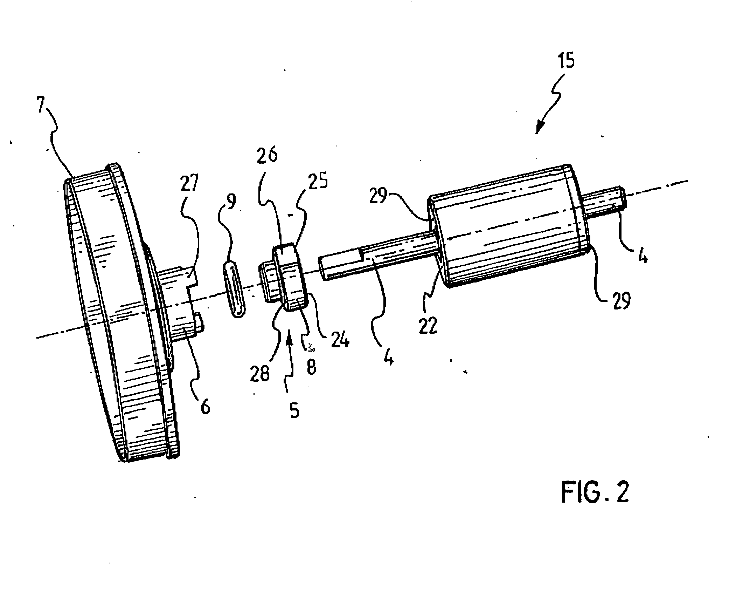

Moreover, figure 2 shows the axial abutment 24 of the bush 8, which also has radial notches 25 and flattenings 26 on the external diameter thereof, to serve as anti-rotation halt with ears 27 which extend from the seat 6 of the bush-carrying disk 7. Obviously, nothing would prohibit to realise these radial notches 25 and flattenings 26 also on the magnet.

The advantages achieved by the present invention are multiple and they are hereafter listed.

The assembly represented by the electric motor 2 and by the pump 1 is much easier to construct, being it not provided with a component, exactly the thrust-bearing, which is no longer used.

Therefore, with the invention, remarkable economies of scale are obtained both in the production step, lower number of parts, and in the assembly step and in the following and possible maintenance step.

The sliding coupling between the abutment 24 of the bush 8 and the side of the rotor 22 allows a safe support of the axial thrust. Obviously, a technician in the field, will be able to bring several changes to the above described fluid circulation pump, in order to meet specific and contingent needs, all however within the scope of protection of the present invention as defined by the following claims.

## Claims

1. Permanent magnet synchronous electric motor with a rotation support with a thrust-bearing, comprising a stator (14), in which a hollow body (12) is housed for supporting and containing a permanent magnet rotor (22), an impeller of a pump (1) being kinematically coupled with a shaft of the electric motor, as well as opposite supports of the shaft (4), one of which being provided with the axial thrust-bearing, **characterised in that** the support (5) provided with the thurst-bearing comprises a bush (8) of antifriction material facing a side (29) of the rotor (22) and having an axial abutment placed directly in contact with said side of the rotor, wherein from the side (29) of the rotor (22) the ends of the permanent magnets (16) emerges and the permanent magnets are of magnetic ceramic material, so as to ensure a correct coupling with said abutment.

2. Permanent magnet synchronous electric motor according to claim 1, **characterised in that** said bush (8) has flattenings on its own external diameter to serve as anti-rotation halt in cooperation with ears (27) extending from a housing seat (6) of a bush-carrying disk (7).

3. Permanent magnet synchronous electric motor according to claim 1, **characterised in that** the bush (8) has radial notches (25) in said axial abutment.

4. Permanent magnet synchronous electric motor according any of the claims 1-3, **characterised in that** said magnetic ceramic material is ceramic ferrite.

5. Synchronous pump with a permanent magnet electric motor according to any of the preceding claims.

## Patentansprüche

1. Elektrischer Permanentmagnetsynchronmotor mit einer Drehlagerung mit einem Drucklager, umfassend einen Stator (14), in dem ein Hohlkörper (12) zwecks Lagerung angeordnet ist, der einen Permanentmagnetrotor (22) enthält, ein Flügelrad einer Pumpe (1), welches kinematisch mit einer Welle des Elektromotors gekoppelt ist, sowie gegenüberliegende Lager der Welle (4), von denen eines mit dem axialen Drucklager ausgebildet ist, **dadurch gekennzeichnet, dass** das mit dem Drucklager ausgerüstete Lager (5) eine Buchse (8) aus einem Antifriktionsmaterial umfasst, welche in Richtung einer Seite (29) des Rotors (22) weist und ein axiales Widerlager aufweist, welches in direktem Kontakt mit der Seite des Rotors angeordnet ist, wobei von der Seite (29) des Rotors (22) die Enden des Permanentmagneten (16) hervortreten und die Permanentmagneten aus einem magnetischen Keramikmaterial bestehen, um eine korrekte Kopplung mit dem Widerlager sicherzustellen.

2. Elektrischer Permanentmagnetsynchronmotor nach Anspruch 1, **dadurch gekennzeichnet, dass** die Buchse (8) Abflachungen auf ihrem eigenen Außendurchmesser aufweist, die zusammen mit sich aus einem Gehäusesitz (6) einer Buchsentragscheibe (7) erstreckenden Vorsprüngen (27) als Verdrehsicherung dienen.

3. Elektrischer Permanentmagnetsynchronmotor nach Anspruch 1, **dadurch gekennzeichnet, dass** die Buchse (8) radiale Ausnehmungen (25) in dem axialen Widerlager aufweist.

4. Elektrischer Permanentmagnetsynchronmotor nach einem der Ansprüche 1 bis 3, **dadurch gekennzeichnet, dass** das magnetische Keramikmaterial keramisches Ferrit ist.

5. Synchronpumpe mit einem elektrischen Permanentmagnetsynchronmotor nach einem der vorangehenden Ansprüche.

## Revendications

1. Moteur électrique synchrone à aimant permanent avec un support de rotation muni d'un palier de butée, comprenant un stator (14), dans lequel un corps creux (12) est ménagé pour supporter et contenir un rotor à aimant permanent (22), une turbine de pompe (1) étant accouplée de manière cinématique à un arbre du moteur électrique, ainsi que des supports opposés de l'arbre (4), dont l'un est muni du palier de butée axial, **caractérisé en ce que** le support (5) muni du palier de butée comprend une bague (8) constituée d'un matériau anti-friction faisant face à un côté (29) du rotor (22) et possédant une butée axiale placée directement en contact avec ledit côté du rotor, dans lequel les extrémités des aimants permanents (16) émergent du côté (29) du rotor (22) et les aimants permanents sont constitués d'un matériau à base de céramique magnétique, afin de s'assurer d'un accouplement correct avec ladite butée.

2. Moteur électrique synchrone à aimant permanent selon la revendication 1, **caractérisé en ce que** ladite bague (8) possède des méplats sur son propre diamètre externe pour servir d'arrêt anti-rotation en coopération avec des oreilles (27) qui s'étendent à partir d'une assise (6) d'un disque de support de bague (7).

3. Moteur électrique synchrone à aimant permanent selon la revendication 1, **caractérisé en ce que** la bague (8) possède des encoches radiales (25) dans ladite butée axiale.

4. Moteur électrique synchrone à aimant permanent selon les revendications 1-3, **caractérisé en ce que** ledit matériau à base de céramique magnétique est de la ferrite céramique.

5. Pompe synchrone avec un moteur électrique à aimant permanent selon l'une quelconque des revendications précédentes.
